# EUROPÄISCHE PATENTSCHRIFT

(11) **EP 0 707 530 B1**
(45) Veröffentlichungstag und Bekanntmachung des Hinweises auf die Patenterteilung: **14.05.1997**
(21) Anmeldenummer: 93912395.6
(22) Anmeldetag: 15.06.1993
(51) Int. Cl.: B28B 11/00, F27B 9/30, F26B 21/02

(54) **VERFAHREN UND EINE ANLAGE ZUM TROCKNEN UND/ODER BRENNEN VON ZIEGELROHLINGEN**
PROCESS AND FACILITY FOR DRYING AND/OR BAKING RAW BRICKS
PROCEDE ET INSTALLATION POUR LE SECHAGE ET/OU LA CUISSON DE BRIQUES VERTES

(30) Priorität: 15.06.1992 AT 1219/92
(43) Veröffentlichungstag der Anmeldung: 24.04.1996
(73) Patentinhaber: WIENERBERGER ZIEGELINDUSTRIE AKTIENGESELLSCHAFT, A-1102 Wien (AT)
(72) Erfinder: LINKE, Walter, A-3301 Mauerbach (AT)
(74) Vertreter: Gibler, Ferdinand, Dipl.Ing. Dr. techn.
(86) Internationale Anmeldenummer: AT9300101
(87) Internationale Veröffentlichungsnummer: WO9325360

(56) Entgegenhaltungen:
- EP-A- 024 475
- DE-A- 006 361
- DE-A- 142 296
- DE-A- 405 870
- DE-A- 828 247
- DE-A- 834 835
- DE-A- 3 338 415
- DE-B- 758 847
- DE-C- 347 010
- FR-A- 300 051
- FR-A- 331 758
- GB-A- 403 930
- US-A- 129 933

## Beschreibung

Die Erfindung betrifft ein Verfahren zum Trocknen und/oder Brennen von Ziegelrohlingen (2), wie z.B. Hochlochziegelrohlingen, wobei die Rohlinge (2) einlagig in Form von Reihen und Zeilen auf einem Transportmittel (12;20) angeordnet werden und das Trocknen durch Warmluft erfolgt, wobei die gegenseitigen Abstände zwischen den Rohlingen (2) derart sind, daß sich sämtliche Rohlinge beim Trocknen und/oder Brennen wie Einzelsteine verhalten.
Herkömmlicherweise wird die Trocknung von Ziegelrohlingen derart vorgenommen, daß die Rohlinge auf einer Palette in vielen Schichten übereinander gestapelt in den Trockner verfahren werden. Durch diese für das Trocknen ungünstige Anordnung bedarf es eines hohen Energie- und Zeitaufwandes, bis auch der innerste Ziegel vollständig getrocknet ist, sofern dieser Zustand überhaupt eintritt. Auch das Brennen der getrockneten Ziegelrohlinge wird im allgemeinen auf dieser Art durchgeführt und bedarf es ebenfalls eines hohen Energie- und Zeitaufwandes.
Es ist bekannt, daß der Ziegelrohling per se in Abhängigkeit von seiner chemischen, mineralogischen und keramischen Zusammensetzung und seiner Gestalt eine durch diese Daten definierte Trocknungs- und Brenndauer hat, welche durch keine Manipulation unterschritten werden kann.
Um also diese Zeit nicht überschreiten zu müssen, muß eine andere als die herkömmlich verwendete und mit den oben genannten Nachteilen behaftete Anordnung der Ziegel gewählt werden, vorzugsweise in einer Lage.
Die DE-C-27 58 847 zeigt eine Anlage zur kontinuierlichen Herstellung von gebrannten Ziegelformlingen, wobei in einem Gehäuse ein Tunneltrockner und ein Tunnelbrennofen übereinander angeordnet sind und die Formlinge den Trockner und den Ofen im Gegenstromprinzip durchlaufen. Die Formlinge sind dabei einlagig in Form von Reihen und Zeilen auf Transporteinrichtungen derart angeordnet, daß die Warmluft die Rohlinge gleichmäßig umströmen kann. Die Formlinge verbleiben sowohl für den Trocken- als auch den Brennvorgang auf ein und derselben Transporteinrichtung, wodurch die beim Betrieb mit aufgestapelten Formlingen häufigen Beschädigungen beim Umsetzen vom Trockenbereich in den Brennbereich vermieden und somit insbesondere der Ausschuß minimiert werden kann.

Eine derartige Anlage verwendet natürlich zielgesetzt die für den Brennbereich ausgelegten Wägen, welche insbesonders aufwendig ausgebildet sind, um den hohen auftretenden Temperaturen zu widerstehen, auch für die Trocknungsphase. Dadurch arbeitet diese Anlage aber doch wieder kostenintensiver als angenommen, da die Herstellung solcher Wägen teuer und für ihren Transport in der Trockenzone ein übermäßiger Energieaufwand notwendig ist.
Aufgabe der vorliegenden Erfindung ist es, die für das Brennen und/oder Trocknen notwendigen Luftmengen zu minimieren und an die durch die chemische und keramische Zusammensetzung und die Gestalt des Rohlings bestimmten physikalischen Grenzen bezüglich der Trocknungs- und Brenadauer des Rohlings per se beim Trocknen und Brennen vieler Rohlinge in einem automatisierten Betrieb heranzukommen.
Eine weitere Aufgabe der Erfindung ist es, den Energieverbrauch drastisch zu reduzieren und die Luftmassenströme durch bessere Nutzung der "physikalischen Grenzen der Luft" zu minimieren.
Weiters macht es sich die Erfindung zur Aufgabe, die Emissionen zu verringeren und eine wartungsfreundliche Anlage zum Trocknen und Brennen von Ziegelrohlingen zu schaffen.

Die Erfindung löst diese Aufgabe bei einem Verfahren der eingangs genannten Art dadurch, daß der Abstand (K) zwischen den in Bewegungsrichtung des Transportmittels angeordneten Reihen größer ist als der Abstand (b) zwischen den Zeilen, derart, daß zwischen den Reihen Kanäle gebildet werden, welche der alternierenden Luftzufuhr bzw. -abfuhr dienen.
Das erfindungsgemäße Verfahren ermöglicht durch die genannte Anordnung der Rohlinge, daß die durch den Rohstoff und die Gestalt vorgegebene Mindestdauer sowohl beim Trocknen als auch beim Brennen nicht überschritten werden muß und die Ziegel unbeschädigt und vollständig getrocknet und gebrannt die Anlage verlassen, wobei natürlich eine Minimierung der zu vewendenden Luftmengen und damit gekoppelt eine Minimierung an Emissionen eintritt, woraus wiederum eine Reduktion des Gesamtaufwandes für die Anlage resultiert.
Das Verfahren ist weiters vorteilhaft dadurch gekennzeichnet, daß der Abstand der Rohlinge zueinander innerhalb einer Reihe kleiner oder maximal gleich der vierfachen Wandstärke der Außenschale des Hochlochziegels gewählt wird.
Damit wird die symmetrische Umströmung der einzelnen Ziegel gefördert und vermieden, daß eine einseitige Sogwirkung entsteht, was wiederum zu einer ungleichmäßigen Behandlung der Ziegel führen könnte.
Insbesonders vorteilhaft ist dabei, daß der Luftquerschnitt zwischen den Rohlingen an allen beströmten Seiten etwa gleich groß gewählt wird.

Das Verfahren ist weiters dadurch gekennzeichnet, daß die Hochlochziegel mit quer zur Transportrichtung oder in Transportrichtung oder auch lotrecht zur Transportrichtung verlaufenden Hochlöchern angeordnet werden.
Jede dieser ausgewählten Richtungen bringt für das Durch- bzw. Umströmen der Ziegel besondere Vorteile und garantiert ein rasches und vollständiges Trocknen bzw. Brennen der Ziegel.
Insbesonders vorteilhaft ist es auch, daß die Organisation der Ziegelanordnung sowohl für das Trocknen als auch das Brennen gleich gewählt wird. Dies bringt insbesondere eine Zeitersparnis mit sich, da bei Durchführung von sowohl Trocknen als auch Brennen keine Änderung der Anordnung notwendig und das Verfahren kompakt durchfuhrbar ist.
Ein weiteres Merkmal des Verfahrens ist es, daß den Kanälen alternierend Mittel zum Hindurchpressen von Luft bzw. zum Absaugen von Luft durch bzw. aus den waagrecht angeordneten Hochlöchern zugeordnet werden.
Auch dieses Umleiten der Luft und ihre damit streng vorgegebene Durchströmrichtung durch die Hochlöcher garantiert ein vorteilhaftes und vollständiges Trocknen der Ziegel, da diese so vollständig von Luft um- und durchströmt werden.
Vorteilhafterweise werden auch beim Brennen der Ziegel von Brennern kommenden Heißgase in die Kanäle zwischen den Hochlochziegeln gepreßt, wobei die Brennerluft auch zusätzlich noch seitlich auf die Hochlochziegel geführt werden kann, um einen noch rascheren Brand herbeizuführen. Dieses Einblasen und Absaugen von Luft eignet sich natürlich insbesonders dann, wenn die Ziegel mit ihren Hochlöchern in bzw. quer zur Transportrichtung des Transportmittels angeordnet sind.
Bei einer Anordnung der Ziegel mit lotrecht zur Transportrichtung verlaufenden Hochlöchern werden beim Trocknen und Brennen vorteilhafterweise in benachbarten Ziegelreihen gegenläufige Luft- bzw. Heißgasströme durch die Hochlöcher hindurchgeführt.
Vorteilhafterweise werden dabei in benachbarten Ziegelreihen gegenläufige Luft- bzw. Heißgasströme durch die Hochlöcher hindurchgeführt.
Dabei werden wenigstens zwei Reihen von Ziegel von derselben Luft durchströmt, vorteilhafterweise durchläuft die Trocknerluft bzw. der Heißgasstrom mehrere Reihen von Ziegeln, vorzugsweise einen ganzen Transporttakt.
Erfindungsgemäß erfolgt das Trocknen sowie das Brennen in gleicher Transportrichtung, was insbesonders für die Beschickung als auch für das Entladen der Ziegel wichtig ist, da durch diesen Verfahrensschritt eine Überwachung dieser Vorgänge von einer Stelle aus auch nur von einer Person möglich ist.
Es ist weiters erfindungsgemäß vorgesehen, daß die Trocknerluft bzw. die von Brennern kommenden Heißgase abschnittsweise konditioniert werden.

Da erfindungsgemäß jeder Ziegel des Verbandes wie ein Einzelstein behandelt wird, kann mit weniger Luft gearbeitet und diese besser ausgenütz werden, d.h. es kann feuchter, bis zu 10 bis 20% unter dem Taupunkt, gearbeitet werden. Hinsichtlich des Sättigungsgrades kann bis an die physikalischen Grenzen der Luft gegangen werden.
Die Durchführung erfolgt nun derart, daß der Trocknerkanal in Abschnitte oder Zonen eingeteilt wird, wobei beispielsweise eine Zone gleich einem Wagen entspricht. Die pro Zone zu verwendende Luft wird in einer Mischkammer hergerichtet, der man von vorne feuchte Luft und von hinten heiße Luft zuführt und diese mischt.
Auf diese Art und Weise wird weniger Luft verbraucht und damit die Emissionen geringer gehalten.
Die abschnittsweise Konditionierung findet natürlich auch beim Brennen Verwendung und es kann dabei mit tieferen Temperaturen gefahren werden, da die entsprechenden Temperaturen näher an den Mindestwert herangebracht werden können, der zum Erreichen des Garbrandes des Scherbens gebraucht wird.
Es wird somit die durchgehende Längsströmung durch die Kanäle des Ofens gemäß dem Stand der Technik vermieden und vorteilhafterweise Zonen geschaffen, in welchen eher Querströme vorherrschen.
Das erfindungsgemäße Verfahren ist weiters dadurch gekennzeichnet, daß die Luft zum Trocknen und/oder die von Brennern kommenden Heißgase jeweils von beiden Enden eines Luft- bzw. Heißgaszufuhr- und/oder -abführkanals zugeführt wird, wobei die Eintrittsgeschwindigkeiten der einander gegenüberliegenden Kanalenden zugeführten Trockneruft bzw. Heißgasen unterschiedlich sind.
Dadurch kann eine Steuerung der Strömungsgeschwindigkeit der Luft über die Ziegelanordnung erfolgen und ist damit über gewisse Bereiche auch vorwählbar.
Die Erfindung betrifft auch eine Anlage zur Durchführung des Verfahrens, mit einem Trockner mit wenigstens einem Trocknerkanal und vorzugsweise einem Brennofen, wobei zumindest im Trocknerkanal jeweils taktweise bewegbare Transportmittel zum Trocknen sowie gegebenenfalls im Brennkanal des Brennofens Transportmittel zum Brennen zur Aufnahme der Rohlinge angeordnet sind.
Es ist Aufgabe der Erfindung, diese Anlage gegenüber herkömmlichen Anlagen möglichst klein zu halten, und damit ihre Bauzeit sowie ihre Herstellungkosten zu senken. Darüberhinaus soll die Anlage wartungsfreundlich ausgebildet sein, um die bei Schäden üblichen An- und Abfahrtszeiten solcher Anlagen, welche einen Stillstand der Anlage bis zu einem Monat bedingen können und damit hohe Kosten verursachen, zu vermeiden.
Die vorliegende Erfindung löst die Aufgabe dadurch, daß der Trocknerkanal und der vorzugsweise Brennkofen nebeneinanderliegend angeordnet sind, daß die Transportmittel beim Trocknen bzw. Brennen der Ziegel sich richtungsgleich bewegen so daß das Beschicken des Trocknerkanals und gegebenenfalls des Brennkanals von einer Seite aus erfolgt, und daß im Trockner die Luftzufuhr- bzw. abführdüsen alternierend bzw. im Brennofen die Brenner in Reihen angeordnet sind.
Weiters ist erfindungsgemäß vorgesehen, daß der Trockner zwei übereinander angeordnete, voneinander getrennte Vorlaufkanäle und der Tunnelofen zwei übereinanderliegende, voneinander getrennte Brennkanäle umfaßt.
Nach weiteren Ausführungsbeispielen ist unterhalb des oder der Vorlaufkanäle ein Rückführkanal für das beladene Transportmittel zum Trocknen, und parallel zum, jedoch außerhalb des Tunnelofens eine Rückführung für das beladene Transportmittel zum Brennen vorgesehen.
Die erfindungsgemäß vorgegebene Bewegungsrichtung der Transportmittel ermöglicht vorteilhafterweise die Positionierung von Bedienungspersonal an nur einer Seite der Anlage und damit sowohl die einfache Überwachung der Beschickung als auch des Umladens der getrockneten Ziegel auf die Transportmittel zum Brennen. Im Fall von Ziegelbruch kann dieser leicht festgestellt werden. Anderseits kann der bereits gebrannte Ziegel während des Rücktransportes bereits auskühlen. Gemäß dieser Ausbildung befindet sich die Verpackungsstelle für die Ziegel ebenfalls an dieser Seite der Anlage und liegt damit auch im Sichtfeld des Bedienungspersonals, welches dadurch stark reduziert werden kann.
Die Transportmittel für die Ziegel selbst sind durch Wägen, Riemen, Luftkissen oder Stäbe gebildet.
Erfindungsgemäß kann das Transportmittel zum Brennen einen Boden zur Aufnahme der Ziegel aufweisen, wobei zwischen den Ziegeln in den Kanälen sich in Richtung der Kanaldecke verjüngende und ein im wesentlichen verkehrtes V bildende Leiteinrichtungen angeordnet sind.
Durch diese vorzugsweise aus Schamotte bestehenden Leiteinrichtungen wird die Richtung des Luftstromes erzwungen, wobei diese Anordnung insbesonders dann eingesetzt wird, wenn die Hochlöcher in oder quer zur Transportrichtung angeordnet sind.
Nach einem anderen Ausführungsbeispiel sind im oberen Bereich des Trockners mit Abstand zueinander angeordnete Saug- bzw. Druckkörper alternierend vorgesehen, wobei diese Saug- bzw Druckkörper gegebenenfalls in Richtung der Kanäle zwischen die Ziegel absenkbar und wieder anhebbar sind.
Die Saug- bzw. Druckkörper selbst sind erfindungsgemäß als mit einer in ihrem oberen Bereich angeordneten Luftzuführ- bzw. Saugleitung versehene, rechteckige Hohlkörper ausgebildet, welche an gegenüberliegenden Seitenflächen Öffnungen zum Luftaus- bzw. -eintritt aufweisen.
Durch diese Anordnung ist also eine weitere Möglichkeit zur direkten Durchströmung der Hochlöcher geschaffen.

Nach einem weiteren Ausführungsbeispiel ist oberhalb der Ziegel eine Abdeckung angeordnet, welche Schlitze zum Durchtreten der Saug- bzw. Druckkörper aufweist.
Nach einer anderen Ausbildung sind Luftzufuhr- bzw. -abführdüsen beim Trocknen und/oder die Brenner beim Brennen in jedem Transporttakt im Bereich der zwischen den Ziegein gebildeten Kanäle zur Bildung einer Luft- bzw. Heißgaswand angeordnet. Dadurch wird ebenfalls ein vorteilhaftes Durchströmen der Hochlöcher und ein gleichmäßiges Trocknen bzw. Brennen der Ziegel garantiert.
Bei Anordnung der Hochlöcher lotrecht zur Transportrichtung ist vorteilhafterweise vorgesehen, daß der Boden des Transportmittels zum Trocknen mit nebeneinander angeordneten Durchbrechungen versehen ist, derart, daß auf den verbleibenden Stegen jeweils zwei nebeneinander angeordnete Ziegel einer Reihe von Ziegeln in ihren Randbereichen aufsetzbar sind, daß in den Durchbrechungen bzw. unterhalb des mit Durchbrechungen durchsetzten Bodens alternierend Einrichtungen zum Blasen und Ansaugen von Luft angeordnet sind, und daß im oberen Bereich des Trockners den Durchbrechungen entsprechende Ausnehmungen vorgesehen sind, wobei jeweils zwei dieser Ausnehmungen miteinander verbunden sind, um ein Umleiten der Luft zu ermöglichen.
Die von unterhalb durch die Hochlöcher der Ziegel geblasene Luft strömt in im oberen Bereich des Trocknerkanals angeordnete Ausnehmungen, von denen jeweils zwei nebeneinander liegende mitsammen so verbunden sind, daß die Luft umgelenkt wird und durch die Hochlöcher der nächsten Reihe von Ziegel strömt.
Vorteilhafterweise erfolgt der Lufteintritt beiderseits seitlich des Trocknerkanals, wobei die Lufteintrittsgeschwindigkeiten dieser beiden Eintritte variierbar sind.
Durch ein Variieren der Eintrittsgeschwindigkeiten kann der Luftstrahl beliebig über die Breite des Kanals verschoben werden.
Die den Trocknerkanal und/oder den Brennerkanal durchlaufenden Transportmittel sind erfindungsgemäß zur Ausnützung der gesamten Kapazität der Anlage dicht hintereinander geführt, wobei die Kanäle vorzugsweise in einem Transporttakt von z.B. zwischen 5 und 10 min durchlaufen werden.
Weiters ist die erfindungsgemäße Anlage dadurch gekennzeichnet, daß das Transportmittel für das Brennen einen mit Durchbrechungen versehenen Boden umfaßt, derart, daß jeweils zwei nebeneinander angeordnete Ziegel einer Reihe von Ziegeln mit ihren Randbereichen auf den verbleibenden Stegen anordenbar sind, daß in den Durchbrechungen alternierend Brenner bzw. Absaugeinrichtungen angeordnet sind, und daß im Brennerkanal oberhalb der Ziegel eine Abdeckung angeordnet ist, welche eine Umlenkung der Luft ermöglicht. Die dabei verwendeten Brenner sind vorzugsweise Hochgeschwindigkeitsbrenner, welche vorteilhafterweise innerhalb kürzester Zeit ohne Regenerations- bzw. Anlaufpause ein- und ausgeschaltet werden können.

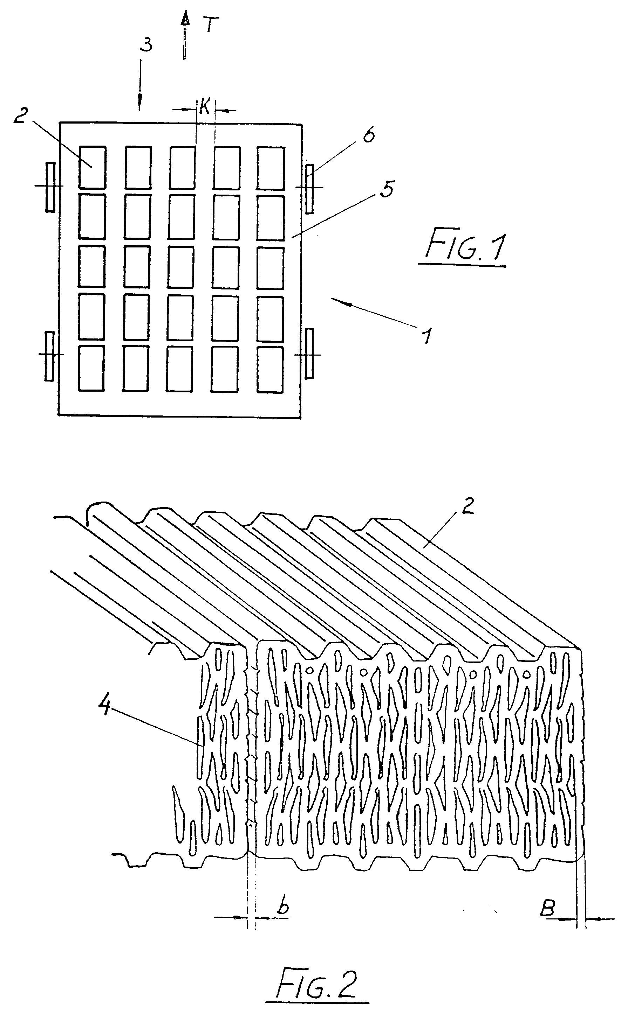

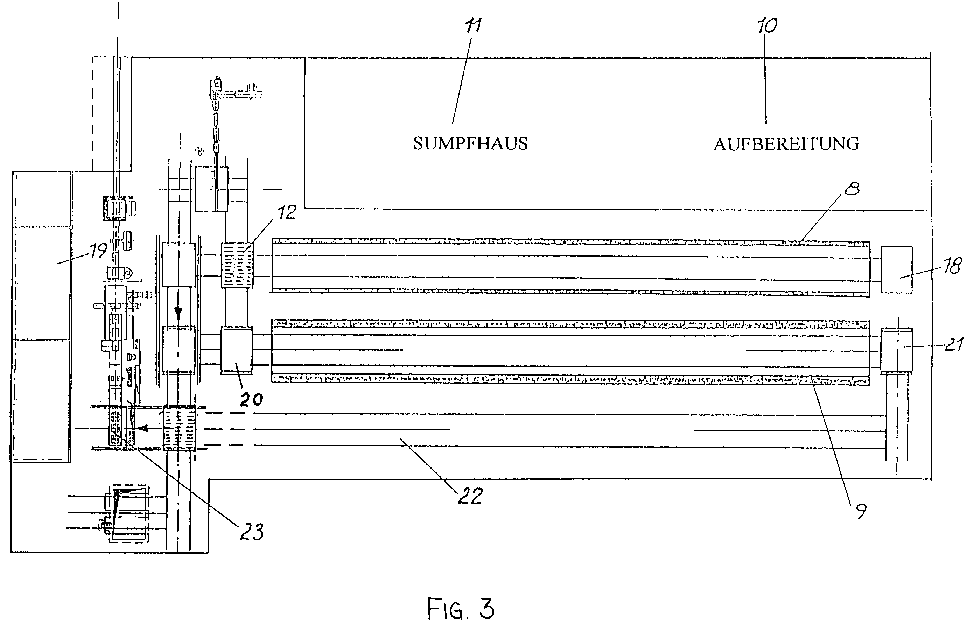

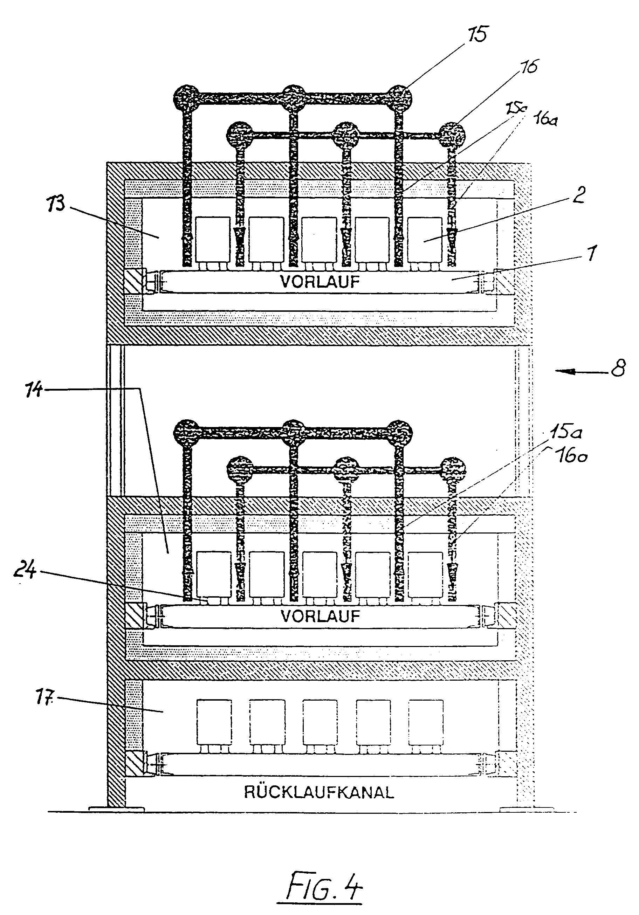

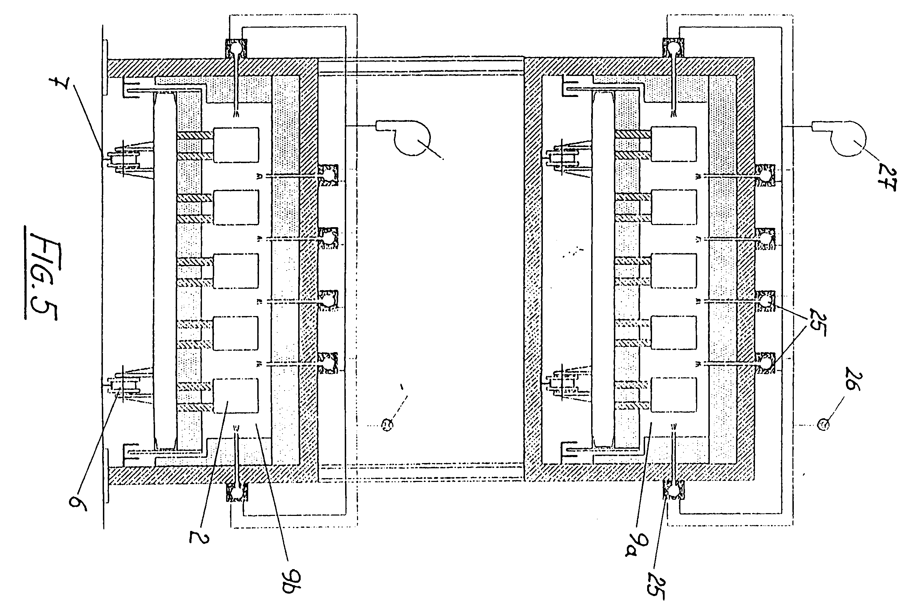

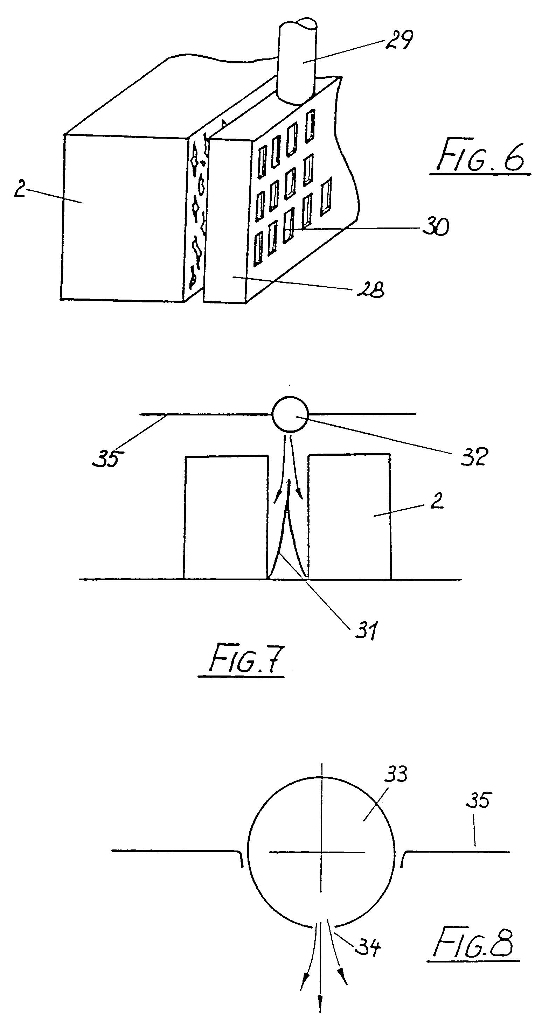

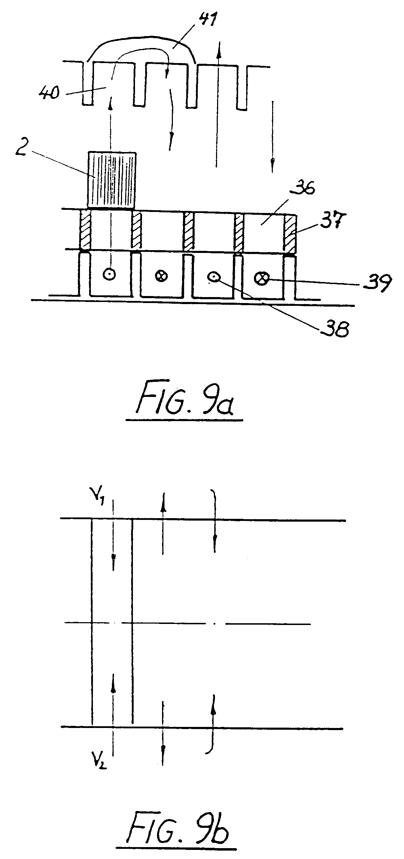

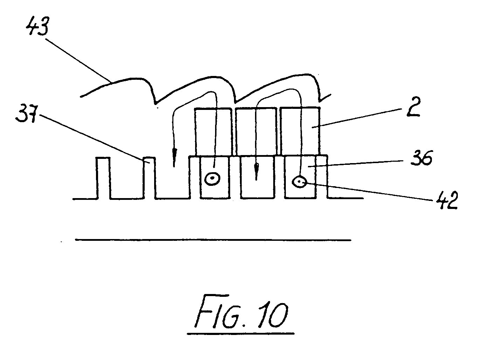

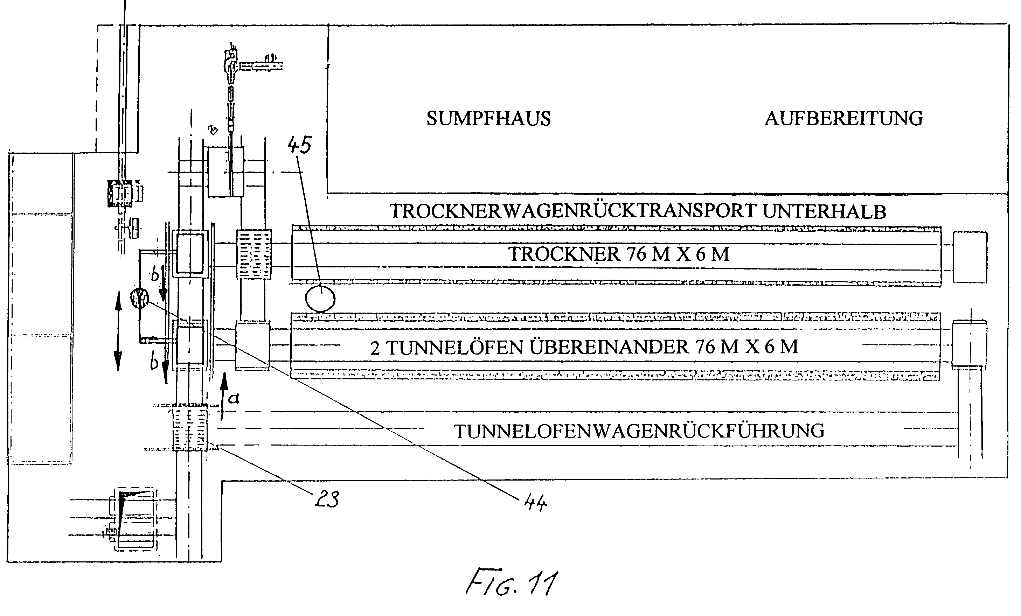

Nach einem weiteren Merkmal der Erfindung ist die Abdeckung wellenförmig ausgebildet, wobei eine Welle jeweils zwei benachbarte Reihen von Ziegel übergreift.
Damit ist ähnlich dem Umlenken der Luft beim Trocknen hier ebenfalls ein Durchlauf der selben Gase durch zwei Reihen von Ziegeln gewährleistet. Vorteilhafterweise durchläuft ein Gasstrom sogar sämtliche Reihen eines Transporttaktes.
Erfindungsgemäß kann das Transportmittel zum Brennen auch einen mit Auflageelementen für die Ziegel versehenen Vollboden aufweisen.
Nach einer anderen Ausführungsform ist im oberen Bereich des oder der Trocknerkanäle ein mit einem Schlitz zum Austritt der Luft versehenes Luftzuführrohr angeordnet, welches um seine Achse verschwenkbar ist.
Durch diese Ausbildung ist ebenfalls eine Steuerung der Austrittsrichtung der Luft möglich. Die erfindungsgemäße Anlage umfaßt vorteilhafterweise aufgrund ihrer Ausbildung sowohl für den Trockner als auch für den Brennofen an der Eintrittsseite der Transportmittel für das Trocknen bzw. Brennen in der Anlage eine gemeinsame Emissioneinrichtung.
Damit wird gegenüber herkömmlichen Anlagen, welche sowohl für den Trockner- und den Brennkanal gesonderte Emissionsquellen aufweisen, auf eine Emissionsquelle reduziert. Dies kann insbesondere deshalb erfolgen, da die Beschickung der Kanäle von nur einer Seite aus erfolgt, und anlagenbedingt die Emissionsquellen immer an der Beschickungsseite angeordnet sind.
Nach einer weiteren Ausbildung der Anlage ist diese an der Eintrittsseite der Transportmittel für das Trocknen bzw. Brennen mit einem Tandemgreifer versehen, wobei die jeweils über die entsprechenden Rückführeinrichtungen der Anlage im untersten Niveau rückgeführten getrockneten und gebrannten Ziegel gemeinsam versetzbar sind.
Dabei werden die rückgeführten gebrannten Ziegel auf dem untersten Niveau vor dem Brennerkanal angeordnet und die getrockneten und gebrannten Ziegelanordnungen vom Tandemgreifer gemeinsam versetzt, wobei die getrockneten Ziegel anschließend den Brennkanal durchlaufen und die gebrannten Ziegel der Verpackung zugeführt werden.
Die Erfindung wird nun im folgenden anhand von Ausführungsbeispielen unter Zuhilfenahme der angeschlossenen Zeichnung näher beschrieben.
Es zeigen Fig.1 die Draufsicht auf eine schematische Anordnung der Ziegel auf ein Transportmittel; Fig.2 eine perspektivische Ansicht eines Ausschnittes der Anordnung nach Fig.1; Fig.3 eine schematische Darstellung der erfindungsgemäßen Anlage; Fig.4 einen Querschnitt durch den Trockner der Anlage nach Fig.3; Fig.5 einen Querschnitt durch zwei übereinander angeordnete Brennerkanäle nach Fig.3; Fig.6 einen Saug- bzw. Druckkörper der erfindungsgemäßen Anlage; Fig.7 einen Querschnitt durch eine Ziegelanordnung; Fig.8 einen Querschnitt durch den oberen Bereich eines Kanals mit einem Luftzuführrohr; Fig.9a einen schematischen Längsschnitt durch eine Ausführungsform des Trocknerkanals; Fig.9b schematisch eine Draufsicht auf die Luftzuführung des Trocknerkanals; Fig. 10 schematisch einen Längsschnitt durch eine Ausführungsform des Brennkanals; und Fig. 11 eine Ausführungsform der Anlage mit Tandemgreifer.
Fig.1 zeigt ein Transportmittel 1 in Form eines Wagens, auf welchem die zu trocknenden bzw. zu brennenden Ziegel 2 in Reihen 3 einlagig angeordnet sind. Vorzugsweise werden Hochlochziegel verwendet wobei die Hochlöcher 4 der Ziegel 2 quer zur Transportrichtung T oder auch in Transportrichtung des Transportmittels oder lotrecht dazu angeordnet sein können. Fig. 2 zeigt Hochlochziegel mit quer zur Transportrichtung angeordneten Hochlöchem. Die Hochlöcher selbst sind von unterschiedlicher Größe mit Querschnitten zwischen rund bis schlitzförmig. Zwischen den Reihen 3 der Ziegel 2 sind Kanäle K vorzugsweise für die Luftzufuhr und -abführung sowie das Einblasen von Heißgasen ausgebildet. Die Ziegel einer Reihe 3 sind voneinander mit einem Abstand b angeordnet, der kleiner oder maximal gleich der vierfachen Wandstärke B der Außenschale des Hochlochziegels, bevorzugt aber darunter liegt.
Durch diese Anordnung, bei welcher die Abstände der Ziegel einer Reihe gegenüber den Abständen der Reihen zueinander verhältnismäßig gering sind, werden Abströmverluste gering gehalten. Die den Ziegeln beim Trocknen zugeführte Luft strömt dabei, wie in Fig.4 dargestellt, in jeden zweiten der von den Reihen 3 der Ziegel 2 gebildeten Kanäle K und wird aus diesen insbesondere durch die Hochlöcher 4 gepreßt und nach dem Austritt aus dem nächstgelegenen Kanal wieder abgesaugt. Es erfolgt damit ein abwechselndes Einpressen und Absaugen der Luft. Beim Brennen strömt nach der in Fig.5 gezeigten Ausführungsform aus Brennern kommendes Heißgas in die Kanäle K. Die Ziegel liegen in den Ausführungsformen nach den Fig.1,4 und 5 auf den Böden 5 von Wägen auf. Als Transportmittel für die Ziegel können aber ebensogut Riemen, Luftkissen oder Stäbe verwendet werden. Unabhängig von der Art des Transportmittels ist es ausschließlich wichtig, daß die Ziegel allseitig gleichmäßig um und durchströmt werden. Eine Lösung dieser Aufgabe wird insbesonders dadurch erzielt, daß der Abstand der Ziegel innerhalb einer Reihe 3 kleiner oder maximal gleich der vierfachen Wandstärke B der Außenschale des Hochlochziegels gewählt wird (Fig.2). Dadurch wird ein übermäßiges Abfließen der Luft durch diesen Bereich vermieden, da das beispielsweise Eintreten einer Sogwirkung unterbunden ist. Falls das Transportmittel als Wagen ausgebildet ist, umfaßt es, wie in Fig.4 dargestellt, seitlich angeordnete Räder, welche in im Trocknerkanal 13,14 des Trockners 8 angeordneten Schienen 7 laufen. Fig.5 zeigt Transportwägen in den Brennerkanälen 9a,9b, welche an der Wagenunterseite mit Rädern 6 versehen sind, die in am Boden jedes Brennerkanals angeordneten Schienen 7 laufen.
Die genannte Anordnung der Ziegel garantiert, daß sämtliche Ziegel einen Trocknungs- oder Brennvorgang erfahren, als würden sie einzeln diesem Prozess unterworfen.

Fig.3 zeigt die gesamte Anlage zum Trocknen und Brennen der Ziegel. Die Anlage umfaßt einen Aufbereitungbereich 10 und ein Sumpfhaus 11, in welchen einerseits die Mischung des Rohmaterials und anschließend die grünen Ziegel mit Hilfe einer Strangpresse und einer Schneideeinrichtung hergestellt werden. Die Ziegel werden sodann auf ein Transportmittel 12 zum Trocknen verladen und durchlaufen den Trockner 8. Dieser ist vorteilhafterweise mehrstöckig ausgebildet und umfaßt, wie in Fig.4 dargestellt, zwei übereinander angeordnete Vorlaufkanäle 13, 14, in welchen die Transportmittel 12 Mann an Mann in zwei Etagen in einer Richtung geführt sind. Vorzugsweise bewegt sich der Transportakt in welchem das Transportmittel vorgerückt wird, in einem Bereich zwischen 5 und 10 Minuten.. d.h. innerhalb dieser Zeitspanne verläßt jeweils ein Wagen mit fertigen Ziegeln einen Kanal und ein neuer wird in den Kanal eingeschoben, wobei die Takte der beiden Kanäle gegeneinander versetzt sind. Jeder Kanal 13,14 ist gemäß der Ausbildung nach Fig.4 mit mehreren Luftzufuhr- bzw. -abfuhrdüsen 15,16 versehen, welche Luft entweder zwischen einen von den Reihen 3 gebildeten Kanal K pressen bzw. aus dem benachbarten Kanal K wiederum absaugen. Es werden auf diese Art Reihen von Luftwänden 15a, 16a gebildet. Unterhalb dieser beiden übereinander angeordneten Vorlaufkanäle 13,14 ist ein Rücklaufkanal 17 für das beladene Transportmittel 12 angeordnet. Die oben beschriebene Ausbildung eines Vorlaufkanals ist insbesondere für die Anordnung der Ziegel mit in oder quer zur Transportrichtung ausgerichteten Hochlöchem geeignet. Bei Anordnung der Hochlöcher lotrecht zur Transportrichtung, wobei logischerweise zwei wählbare Varianten zur Verfügung stehen, entspricht der Aufbau jenem in Fig.9a dargestellten. Beim Verlassen der Vorlaufkanäle werden die Transportmittel über eine Absenkeinrichtung 18 abgesenkt und durch den Rücklaufkanal 17 wieder an die Ausgangsseite des Trockners 8 transportiert. Während dieser Rückführzeit können durch unvorhergesehene Umstände, wie bspw. einer nicht ganz richtigen Rezeptur, noch nicht vollständig getrocknete Ziegel noch nachtrocknen. An der Vorderseite der Anlage ist eine Überwachungsstation 19 vorgesehen, welche durch die vorteilhafterweise einseitige Beobachtung der Beendigung von sowohl Trocken- als auch Brennvorgang von vorzugsweise nur einen Mann besetzt sein muß.
Die getrockneten Ziegel jedes aus dem Rücklaufkanal 17 austretenden Transportmittels 12 werden auf ein weiteres Transportmittel 20 zum Brennen umgeschichtet. Der Tunnelofen 9 besteht vorteilhafterweise ebenfalls aus zwei übereinander angeordneten Brennkanälen 9a,9b.
Die Brennkanäle sind für den in Fig.5 gezeigten Fall, der für das Brennen von Ziegeln mit quer zur oder in Transportrichtung angeordneten Hochlöchern geeignet ist, mit Deckenbrennern 25 versehen, welche von einer Gasversorgung 26 gespeist werden. Die Deckenbrenner sind gleichmäßig über die Fläche verteilte kleine Brenner, und sind vorzugsweise kanalorientiert. Weiters sind die Brenner mit einem Brennerluftventilator 27 verbunden. Wie in Fig.5 dargestellt, können auch an den Kanalseiten Brenner angeordnet sein. Es wird damit ein umfassendes Brennen garantiert.
Nach dem Austritt der Transportmittel 20 aus dem Tunnelofen werden diese wieder durch eine Einrichtung 21 abgesenkt und jedenfalls über eine parallel zum Tunnelofen verlaufende, jedoch außerhalb dieser Anordnung vorgesehenen Transportmittelrückführung 22 seitlich verschoben und in den Bereich der Übenwachungsstation 19 zurückgeführt. Diese Rückführung ist insbesondere deshalb günstig, weil die gebrannten Ziegel dabei einen Puffer haben, während dem sie abkühlen können.
Die Ziegel kommen also schon verhältnismäßig kühl zu der am Ende der Transportmittelrückführung angeordneten Verpackungsstation 23 und können daher problemlos verpackt werden.
Die in Fig.4 dargestellte Zuführung der Luft mittels Luftwänden ist nur eine der möglichen Ausführungsformen.
So können beispielsweise, wie in Fig.6 dargestellt, Saug- bzw. Druckkörper 28 verwendet werden, welche über eine Luftleitung 29 mit Luft versorgt werden oder die aus den Ziegeln austretende Luft über diese wieder absaugen. Diese Körper sind Hohlkörper und können in die Kanäle K zwischen den von den Ziegeln gebildeten Reihen gesenkt bzw. wieder angehoben werden. Weiters sind die Körper 28 mit einer Vielzahl von Austrittsöffnungen 30 versehen, durch welche Trocknerluft beiderseits aus den Körpern durch die Hochlöcher der Ziegel gedrückt und diese in der benachbarten Reihe wieder abgesaugt wird. Nach einer vorteilhaften Ausbildung sind diese Saug- bzw. Druckkörper quer zur Transportrichtung angeordnet und müssen daher beim Weiterrücken der Wägen um einen Transporttakt aus den Kanälen K wieder hochgehoben werden.
Weiters ist eine wie in Fig.7 schematisch dargestellte Ausführungsform möglich, bei der in der Reihe zwischen den Ziegeln Leiteinrichtungen 31 angeordnet sind, welche sich nach oben zu verjüngen und damit in Form eines verkehrten V die Strömungsrichtung der aus einer Düse 32 austretenden Luft beeinflussen. Durch diese gelenkte Luftführung ist eine optimale Durchströmung der Ziegel garantiert. Aufgrund der beim Brennen der Ziegel auftretenden hohen Temperaturen sind diese Leiteinrichtungen vorzugsweise aus Schamotte.
Eine weitere Möglichkeit ist in Fig.8 dargestellt, welche ein Luftzuführrohr 33 zeigt, welches an seiner Unterseite mit einem Schlitz 34 versehen ist, durch welchen Luft auf die Ziegel geblasen werden kann. Das Luftzuführrohr 33 ist um seine Achse verschwenkbar und kann damit einen begrenzten Bereich der Ziegel überstreichen.
Vorteilhafterweise ist oberhalb der Ziegel im Kanal eine Abdeckung 35 angeordnet, um den Verlust an zugeführter Luft zu minimieren. Diese Abdeckung ist mit Schlitzen versehen, um die Luftzufuhr und -abführung zu garantieren.

Erfolgt die Anordnung der Ziegel nun, wie anfangs ausgeführt, mit lotrecht zur Transportrichtung T angeordneten Hochlöchern 4, werden die in den Fig.9a,9b und 10 dargestellten Ausführungsformen des Trockners bzw. des Brennofens gewählt.
Fig.9a zeigt einen Schnitt durch einen Vorlaufkanal in Transportrichtung, wobei die Ziegel 2 auf einem Transportmittel aufliegen, welches mit nebeneinander angeordneten Durchbrechungen 36 versehen ist, wobei die Ziegel mit ihren Randbereichen auf den verbleibenden Stegen 37 aufsitzen. Die Transporttakte der Transportmittel sind so gewählt, daß die Durchbrechungen 36 gerade über im Boden des Kanals angeordneten Einrichtungen zum Blasen 38 bzw. Ansaugen 39 zum Stillstand kommen. Es wird Luft von einer Einrichtung 38 zum Blasen durch die Hochlöcher der Ziegel 2 gedrückt und in oberhalb der Durchbrechungen im Deckenbereich des Kanals angeordnete Ausnehmungen 40 geführt. Jeweils zwei solcher Ausnehmungen 40 sind über einen Kanal 41 mitsammen verbunden. Dadurch wird die Luft umgeleitet und durch die Hochlöcher der benachbarten Reihe von Ziegeln wieder nach unten gedrückt und der Einrichtung 39 zum Ansaugen zugeführt.
Nach der in Fig.9a dargestellten Ausführungsform sind abwechselnd Einrichtungen zum Blasen und Ansaugen dargestellt. Vorteilhafterweise wird die einmal zugeführte Luft über einen gesamten Takt verwendet, d.h. Der Trocknerkanal wird in Zonen eingeteilt, wobei für den Fall von zu feuchter Luft - nach zu vielen Durchläufen - diese über einen Bypaß einer Regeneration zugeführt wird. Indem jeder Ziegel des Verbandes wie ein Einzelstein behandelt wird, kann bis zu 10 bis 20% unter dem Taupunkt gearbeitet werden. Die Luft pro Zone wird in einer nicht dargestellten Mischkammer im Hinblick auf Feuchtgehalt und Temperatur konditioniert.
In Fig.9b ist dargestellt, wie der Lufteintritt erfolgt. Dabei ist ersichtlich, daß der Lufteintritt ebenso wie der Luftaustritt von beiderseits des Kanals erfolgt. Vorteilhafterweise sind die Eintrittsgeschwindigkeiten der Luft in diesen beiden Kanälen unteschiedlich groß, wodurch eine Regelung hinsichtlich der Bestreichung der Ziegelanordnung gewählt werden kann.
Der Brennkanal für mit lotrecht zur Transportrichtung angeordneten Ziegeln ist ähnlich ausgestaltet und in Fig. 10 dargestellt.
Bei lotrecht zur Transportrichtung angeordneten Ziegeln ergibt sich weiters die Möglichkeit, die Ziegelreihen in oder quer zur Transportrichtung zu wählen.
Im in Fig. 10 als quer zur Transportrichtung geschnittenen Brennkanal sind ebenfalls Durchbrechungen 36 im Transportmittel zum Brennen vorgesehen, wobei die Ziegel 2 mit ihren Randbereichen auf den Stegen 37 angeordnet werden. In diesen Ausnehmungen sind ebenfalls alternierend Brenner 42 und Absaugeinrichtungen vorgesehen, wobei die Brenner vorzugsweise Hochgeshwindigkeitsbrenner sind, welche eine optimale Energieübertragung auf den Ziegel gewährleisten.

Das Heißgas durchströmt die Hochlöcher der Ziegel von unten her und wird an der Oberseite des Brennkanals von einer Abdeckung abgelenkt und wieder durch die Ziegel der benachbarten Reihe von Hochlochziegeln gedrückt.
Die Abdeckung 43 ist vorzugsweise wellenförmig ausgebildet, wobei eine Welle jeweils zwei benachbarte Reihen von Ziegel übergreift.
Auch beim Brennen der Ziegel werden die von den Brennern kommenden Heißgase abschnittsweise konditioniert, d.h. der Brennkanal in Zonen eingeteilt. Man kann dadurch mit tieferen Temperaturen fahren und durch das Konditionieren die Temperaturen näher an den Wert heranbringen, der zur Erzielung der geforderten Wärmeleitfähigkeit des Scherbens gebraucht wird. Es herrschen dabei vorteilhafterweise im wesentlichen Querströme vor.
Durch den geringeren Luft- bzw. Heißgasverbrauch ergibt sich auch eine geringere Emission. Wie bereits ausgeführt, werden sämtliche zu beobachtende Schritte, nämlich das Umschichten der getrockneten Ziegel, bei welchem leicht Bruch entstehen kann, und das Verpacken der Ziegel an einer Seite der Anlage im Bereich der Überwachungsstation 19 ausgeführt.
Zufolge der identen Beschickungsrichtung sowohl des Trockner- als auch Brennkanals kann die Anlage mit nur einer gemeinsamen Emissionseinrichtung 45 versehen werden, wodurch zu den herkömmlicherweise anlagebedingten zwei verwendeten Emissionsquellen z.B. eine Kostenersparnis bei Erstellung der Anlage auftritt.
Fig. 11 zeigt eine weitere Ausführungsform der Anlage, wobei im Beschickungsbereich ein Tandemgreifer 44 vorgesehen ist. Die über die Rückführung 22 kommenden gebrannten Ziegel werden auf unterstem Niveau vor den Brennkanal verschoben (Pfeil a). Ebenfalls auf unterstem Niveau befinden sich die über die Rückführeinrichtung des Trockners rückgeführten getrockneten Ziegel.
Der Tandemgreifer ergreift nun sowohl die getrockneten als auch die gebrannten Ziegel gemeinsam und versetzt sie zusammen in der durch den Pfeil b angegebenen Richtung. Die getrockneten Ziegel sind damit in richtiger Position zur Beschickung des Brennkanals, die gebrannten Ziegel können verpackt werden.
Es besteht aber durchaus auch die Möglichkeit, auf den Rückführkanal 17 zu verzichten und die Ziegel bereits an der Rückseite der Anlage umzuschichten. Die dabei ersparten Kosten für die Rückführkanäle werden allerdings mit dem Nachteil erkauft, daß die Ziegel keine Nachtrockenzeit haben. Darüberhinaus kann das Umladen der Ziegel so ohne Hilfsmittel nicht von einer zentralen Stelle aus überwacht werden und die Gesamtanlage von nur einer einzigen Person bedient werden.
Die hier beschriebene Anlage ist aufgrund ihres einfachen Aufbaues wartungsfreundlich und trotz hohem Durchsatz relativ klein. Daraus resultiert auch eine kürzere Bauzeit und geringere Gestehungskosten.

## Patentansprüche

1. Verfahren zum Trocknen und/oder Brennen von Ziegelrohlingen (2), wie z.B. Hochlochziegelrohlingen, wobei die Rohlinge (2) einlagig in Form von Reihen und Zeilen auf einem Transportmittel (12;20) angeordnet werden und das Trocknen durch Warmluft erfolgt, wobei die gegenseitigen Abstände zwischen den Rohlingen (2) derart sind, daß sich sämtliche Rohlinge beim Trocknen und/oder Brennen wie Einzelsteine verhalten, **dadurch gekennzeichnet**, daß der Abstand (K) zwischen den in Bewegungsrichtung des Transportmittels angeordneten Reihen größer ist als der Abstand (b) zwischen den Zeilen, derart, daß zwischen den Reihen Kanäle gebildet werden, welche der alternierenden Luftzufuhr bzw. -abfuhr dienen.

2. Verfahren nach Anspruch 1, **dadurch gekennzeichnet**, daß der Abstand (b) der Rohlinge zueinander innerhalb einer Reihe (3) kleiner oder maximal gleich der vierfachen Wandstärke (B) der Außenschale des Hochlochziegels gewählt wird.

3. Verfahren nach den Ansprüchen 1 oder 2, **dadurch gekennzeichnet**, daß die Hochlochziegel mit quer zur Transportrichtung (T) verlaufenden Hochlöchern (4) angeordnet werden.

4. Verfahren nach den Ansprüchen 1 oder 2, **dadurch gekennzeichnet**, daß die Hochlochziegel mit in Transportrichtung verlaufenden Hochlöchern angeordnet werden.

5. Verfahren nach den Ansprüchen 1 oder 2, **dadurch gekennzeichnet**, daß die Hochlochziegel mit lotrecht zur Transportrichtung verlaufenden Hochlöchern angeordnet werden.

6. Verfahren nach den vorhergehenden Ansprüchen, **dadurch gekennzeichnet**, daß die Organisation der Ziegelanordnung sowohl für das Trocknen als auch das Brennen gleich gewählt wird.

7. Verfahren nach den Ansprüchen 3 und 4, **dadurch gekennzeichnet**, daß den Kanälen alternierend Mittel zum Hindurchpressen von Luft bzw. zum Absaugen von Luft durch bzw. aus den waagrecht angeordneten Hochlöchern zugeordnet werden (Fig.4,5).

8. Verfahren nach den Ansprüchen 3 und 4, **dadurch gekennzeichnet**, daß beim Brennen der Ziegel die von Brennern kommenden Heißgase in die Kanäle (K) zwischen den Hochlochziegeln gepreßt wird.

9. Verfahren nach Anspruch 8, **dadurch gekennzeichnet**, daß die von Brennern kommenden Heißgase seitlich auf die Hochlochziegel geführt wird.

10. Verfahren nach Anspruch 5, **dadurch gekennzeichnet**, daß beim Trocknen von Ziegein mit lotrecht zur Transportrichtung angeordneten Hochlöchern in benachbarten Ziegelreihen gegenläufige Luftströme durch die Hochlöcher hindurchgeführt werden.

11. Verfahren nach Anspruch 5, **dadurch gekennzeichnet**, daß beim Brennen von Ziegein mit lotrecht zur Transportrichtung angeordneten Hochlöchern in benachbarten Ziegelreihen gegenläufige Heißgasströme durch die Hochlöcher hindurchgeführt werden.

12. Verfahren nach den Ansprüchen 10 oder 11, **dadurch gekennzeichnet**, daß die Trocknerluft bzw. die Heißgase durch eine Reihe der Ziegel gepreßt wird (werden) und nach einer Umlenkung wieder durch die Hochlöcher der Ziegel der benachbarten Reihe geführt wird (werden).

13. Verfahren nach Anspruch 12, **dadurch gekennzeichnet**, daß die Trocknerluft bzw.die von Brennern kommenden Heißgase abschnittsweise konditioniert werden.

14. Verfahren nach Anspruch 1, **dadurch gekennzeichnet**, daß das Trocknen sowie das Brennen in gleicher Transportrichtung erfolgt.

15. Verfahren nach Anspruch 10 oder 11, **dadurch gekennzeichnet**, daß die Luft zum Trocknen und/ oder die von Brennern kommenden Heißgase jeweils von beiden Enden eines Luft- bzw. Heißgaszufuhr- und/oder -abfuhrkanals (K) zugeführt wird.

16. Verfahren nach Anspruch 15, **dadurch gekennzeichnet**, daß die Eintrittsgeschwindigkeiten der von einander gegenüberliegenden Kanalenden zugeführten Trocknerluft bzw. Heißgasen unterschiedlich sind.

17. Anlage zur Durchführung des Verfahrens nach den Ansprüchen 1 bis 16, mit einem Trockner (8) mit wenigstens einem Trocknerkanal und vorzugsweise einem Brennofen (9), wobei zumindest im Trocknerkanal jeweils taktweise bewegbare Transportmittel zum Trocknen (12) sowie gegebenenfalls im Brennkanal des Brennofens Transportmittel zum Brennen (20) zur Aufnahme der Rohlinge angeordnet sind, **dadurch gekennzeichnet**, daß der Trocknerkanal (8) und der vorzugsweise Brennofen (9) nebeneinanderliegend angeordnet sind, und daß die Transportmittel beim Trocknen bzw. Brennen der Ziegel sich richtungsgleich bewegen, so daß das Beschicken des Trocknerkanals und gegebenenfalls des Brennkanals von einer Seite aus erfolgt und daß im Trockner die Luftzufuhr- bzw. Luftabführdüsen (15,16) alternierend bzw. im Brennofen die Brenner in Reihen angeordnet sind.

18. Anlage nach Anspruch 17, **dadurch gekennzeichnet**, daß die Transportmittel für die Ziegel durch Wägen, Riemen, Luftkissen oder Stäbe gebildet sind.

19. Anlage nach Anspruch 18, **dadurch gekennzeichnet**, daß das Transportmittel zum Brennen einen Boden zur Aufnahme der Ziegel aufweist, wobei zwischen den Ziegeln in den Kanälen sich in Richtung der Kanaldecke verjüngende, und ein im wesentlichen verkehrtes V bildende Leiteinrichtungen angeordnet sind.

20. Anlage nach Anspruch 17, **dadurch gekennzeichnet**, daß im oberen Bereich des Trockners (8) mit Abstand zueinander angeordnete Saug- bzw. Druckkörper (28) alternierend vorgesehen sind, und daß diese Saug- bzw. Druckkörper gegebenenfalls in Richtung der Kanäle (K) zwischen die Ziegel absenkbar und wieder anhebbar sind.

21. Anlage nach Anspruch 20, **dadurch gekennzeichnet**, daß oberhalb der Ziegel (2) eine Abdeckung (35) angeordnet ist, welche Schlitze zum Durchtreten der Saug-bzw. Druckkörper (28) aufweisen.

22. Anlage nach Anspruch 17, **dadurch gekennzeichnet**, daß die Luftzufuhr- bzw. abführdüsen beim Trocknen und/oder die Brenner beim Brennen in jedem Transporttakt im Bereich der zwischen den Ziegeln gebildeten Kanäle (K) zur Bildung einer Luft- bzw. Heißgaswand angeordnet sind.

23. Anlage nach Anspruch 17, **dadurch gekennzeichnet**, daß der Boden des Transportmittels (12) zum Trocknen mit nebeneinander angeordneten Durchbrechungen (36) versehen ist, derart, daß auf den verbleibenden Stegen (37) jeweils zwei nebeneinander angeordnete Ziegel (2) einer Reihe von Ziegeln in ihren Randbereichen aufsetzbar sind, daß in den Durchbrechungen bzw. unterhalb des mit Durchbrechungen (36) durchsetzten Boden alternierend Einrichtungen (38,39) zum Blasen und Ansaugen von Luft angeordnet sind, und daß im oberen Bereich des Trockners den Durchbrechungen entsprechende Ausnehmungen (40) vorgesehen sind, wobei jeweils zwei dieser Ausnehmungen (40) miteinander verbunden sind, um ein Umleiten der Luft zu ermöglichen.

24. Anlage nach Anspruch 23, **dadurch gekennzeichnet**, daß der Lufteintritt beiderseits seitlich des Trocknerkanals erfolgt, und daß die Lufteintrittsgeschwindigkeiten dieser beiden Eintritte variierbar sind.

25. Anlage nach Anspruch 17, **dadurch gekennzeichnet**, daß das Transportmittel (20) für das Brennen einen mit Durchbrechungen (36) versehenen Boden umfaßt, derart, daß jeweils zwei nebeneinander angeordnete Ziegel (2) einer Reihe von Ziegeln mit ihren Randbereichen auf den verbleibenden Stegen (37) anordenbar sind, daß in den Durchbrechungen (36) alternierend Brenner (42) bzw. Absaugeinrichtungen angeordnet sind, und daß im Brennkanal oberhalb der Ziegel eine Abdeckung (38) angeordnet ist, welche eine Umlenkung der Luft ermöglicht.

26. Anlage nach einem der Ansprüche 17, 23 oder 25, **dadurch gekennzeichnet**, daß die den Trocknerkanal und/ oder den Brennkanal durchlaufenden Transportmittel dicht hintereinander geführt sind.

27. Anlage nach Anspruch 25, **dadurch gekennzeichnet**, daß die Brenner Hochgeschwindigkeitsbrenner sind.

28. Anlage nach Anspruch 25, **dadurch gekennzeichnet**, daß die Abdeckung wellenförmig ausgebildet ist, wobei eine Welle-jeweils zwei benachbarte Reihen von Ziegel übergreift.

29. Anlage nach einem der Ansprüche 17 bis 28, **dadurch gekennzeichnet**, daß der Trockner (8) zwei übereinander angeordnete, voneinander getrennte Vorlaufkanäle (13,14) umfaßt.

30. Anlage nach einem der Ansprüche 17 bis 28, **dadurch gekennzeichnet**, daß der Tunnelofen (9) zwei übereinanderliegende, voneinander getrennte Brennkanäle (9a,9b) umfaßt.

31. Anlage nach Anspruch 17 oder 29, **dadurch gekennzeichnet**, daß unterhalb des oder der Vorlaufkanäle (13,14) ein Rückführkanal (15) für das beladene Transportmittel (12) zum Trocknen vorgesehen ist.

32. Anlage nach Anspruch 17 oder 30, **dadurch gekennzeichnet**, daß parallel zum, jedoch außerhalb des Tunnelofens (9) eine Rückführung (22) für das beladene Transportmittel (20) zum Brennen vorgesehen ist.

33. Anlage nach Anspruch 17, **dadurch gekennzeichnet**, daß das Transportmittel (20) zum Brennen einen mit Auflageelementen (24) für die Ziegel (2) versehenen Vollboden aufweist.

34. Anlage nach Anspruch 17, **dadurch gekennzeichnet**, daß im oberen Bereich des oder der Trocknerkanäle ein mit einem Schlitz zum Austritt der Luft versehenes Luftzuführrohr angeordnet ist, und daß dieses Luftzuführrohr um seine Achse verschwenkbar ist.

35. Anlage nach Anspruch 17, **dadurch gekennzeichnet**, daß sowohl für den Trockner (8) als auch für den Tunnelofen (9) an der Eintrittseite der Transportmittel (12,20) für das Trocknen bzw. Brennen in die Anlage eine gemeinsame Emissionseinrichtung (45) vorgesehen ist.

36. Anlage nach Anspruch 17, **dadurch gekennzeichnet**, daß an der Eintrittsseite der Transportmittel (12,20) für das Trocknen bzw. Brennen ein Tandemgreifer (44) vorgesehen ist, wobei die jeweils über die entsprechenden Rückführeinrichtungen (15,22) der Anlage im untersten Niveau rückgeführten getrockneten und gebrannten Ziegel gemeinsam versetzbar sind.

37. Anlage nach Anspruch 20, **dadurch gekennzeichnet**, daß die Saug- bzw. Druckkörper (28) als mit einer in ihrem oberen Bereich angeordneten Luftzufuhr- bzw. saugleitung (29) versehene rechteckige Hohlkörper ausgebildet sind, und daß sie an gegenüberliegenden Seitenflächen Öffnungen (30) zum Luftaus- bzw. -eintritt aufweisen.

## Claims

1. Process for drying and/or burning green bricks (2), such as for example vertical core green bricks, the green bricks (2) being arranged on a transporting means (12; 20) in a single layer in the form of rows and columns, and the drying being carried out by means of hot air, the mutual distances between the green bricks (2) being such that all the green bricks behave as individual blocks on drying and/or burning, characterized in that the distance (K) between the rows arranged in the direction of movement of the transporting means is greater than the distance (b) between the columns, such that ducts, which are used for the alternating supply and discharge of air, are formed between the rows.

2. Process according to Claim 1, characterized in that the distance (b) between the green bricks within a row (3) is selected to be smaller than, or at most equal to, four times the wall thickness (B) of the outer shell of the vertical core brick.

3. Process according to Claim 1 or 2, characterized in that the vertical core bricks are arranged with their vertical cores (4) running transversely to the direction (T) of transportation.

4. Process according to Claim 1 or 2, characterized in that the vertical core bricks are arranged with their vertical cores running in the direction of transportation.

5. Process according to Claim 1 or 2, characterized in that the vertical core bricks are arranged with their vertical cores running vertically with respect to the direction of transportation.

6. Process according to the preceding claims, characterized in that the layout of the arrangement of bricks is selected to be identical both for the drying and the burning.

7. Process according to Claims 3 and 4, characterized in that means for forcing through air and for extracting air through or from the horizontally arranged vertical cores are assigned alternately to the ducts (Figs. 4, 5).

8. Process according to Claims 3 and 4, characterized in that the hot gases emanating from burners are forced into the ducts (K) between the vertical core bricks during burning of the bricks.

9. Process according to Claim 8, characterized in that the hot gases emanating from burners are guided laterally onto the vertical core bricks.

10. Process according to Claim 5, characterized in that, when bricks are being dried with their vertical cores arranged vertically with respect to the direction of transportation, counter-current airflows are guided through the vertical cores in adjacent rows of bricks.

11. Process according to Claim 5, characterized in that, when bricks are being burned with their vertical cores arranged vertically with respect to the direction of transportation, counter-current hot-gas flows are guided through the vertical cores in adjacent rows of bricks.

12. Process according to Claims 10 and 11, characterized in that the dryer air or the hot gases is (are) forced through a row of the bricks and, after a deflection, is (are) guided back through the vertical cores of the bricks in the adjacent row.

13. Process according to Claim 12, characterized in that the dryer air or the hot gases emanating from burners are conditioned in sections.

14. Process according to Claim 1, characterized in that the drying and the burning take place in the same direction of transportation.

15. Process according to Claim 10 or 11, characterized in that the air for drying and/or the hot gases emanating from burners is in each case supplied from both ends of an air or hot-gas supply and/or discharge duct (K).

16. Process according to Claim 15, characterized in that the entry speeds of the dryer air or hot gases supplied from opposite ends of the duct are different.

17. Facility for carrying out the process according to Claims 1 to 16, having a dryer (8) with at least one dryer duct and preferably a kiln (9), cyclically moveable transportation means for drying (12) at least being in each case arranged in the dryer duct and transportation means for burning (20) optionally being arranged in the burner duct of the kiln, in order to hold the green bricks, characterized in that the dryer duct (8) and preferably the kiln (9) are arranged next to one another, and in that the transportation means move in the same direction during drying or burning of the bricks, so that the dryer duct and optionally the burner duct are fed from one side and so that the air supply and air discharge nozzles (15, 16) are arranged alternately in the dryer and the burners are arranged in rows in the kiln.

18. Facility according to Claim 17, characterized in that the transportation means for the bricks are formed by cars, belts, air cushions or bars.

19. Facility according to Claim 18, characterized in that the transportation means for burning has a base for holding the bricks, directing devices which taper in the direction of the duct cover and form an essentially inverted V being arranged in the ducts between the bricks.

20. Facility according to Claim 17, characterized in that suction and compression elements (28) which are arranged alternately at a distance from one another are provided in the upper region of the dryer (8), and in that these suction and compression elements can optionally be lowered and raised again between the bricks in the direction of the ducts (K).

21. Facility according to Claim 20, characterized in that a covering (35) is arranged above the bricks (2), which covering has slots for the suction or compression elements (28) to pass through.

22. Facility according to Claim 17, characterized in that the air supply and discharge nozzles, during drying, and/or the burners, during burning, are arranged in each transportation cycle in the region of the ducts (K) formed between the bricks, in order to form a wall of air or hot gas.

23. Facility according to Claim 17, characterized in that the base of the transportation means (12) for drying is provided with openings (36) arranged next to one another, such that in each case two bricks (2) arranged next to one another in a row of bricks can be placed by their edge regions on the remaining webs (37), in that devices (38, 39) for blowing and sucking in air are arranged alternately in the openings or beneath the base which is perforated by openings (36), and in that recesses (40) corresponding to the openings are provided in the upper region of the dryer, in each case two of these recesses (40) being connected to one another, in order to allow the air to be diverted.

24. Facility according to Claim 23, characterized in that the air enters on both sides of the dryer duct, and in that the air entry speeds of these two entries can be varied.

25. Facility according to Claim 17, characterized in that the transportation means (20) for burning comprises a base provided with openings (36), such that in each case two bricks (2) arranged next to one another in a row of bricks can be arranged with their edge regions on the remaining webs (37), in that burners (42) and extraction devices are arranged alternately in the openings (36), and in that a covering (38) is arranged in the burner duct above the bricks, which covering allows the air to be diverted.

26. Facility according to one of Claims 17, 23 or 25, characterized in that the transportation means running through the dryer duct and/or the burner duct are guided closely behind one another.

27. Facility according to Claim 25, characterized in that the burners are high-speed burners.

28. Facility according to Claim 25, characterized in that the covering is of a wave-shaped design, one wave in each case covering two adjacent rows of bricks.

29. Facility according to one of Claims 17 to 28, characterized in that the burner (8) comprises two feed ducts (13, 14) which are arranged above one another and are separated from one another.

30. Facility according to one of Claims 17 to 28, characterized in that the tunnel furnace (9) comprises two burner ducts (9a, 9b) which lie above one another and are separated from one another.

31. Facility according to Claim 17 or 29, characterized in that a return duct (15) for the loaded transportation means (12) for drying is provided beneath the feed duct or ducts (13, 14).

32. Facility according to Claim 17 or 30, characterized in that a return (22) for the loaded transportation means (20) for burning is provided parallel to the tunnel furnace (9), but outside it.

33. Facility according to Claim 17, characterized in that the transportation means (20) for burning has a solid base provided with holding elements (24) for the bricks (2).

34. Facility according to Claim 17, characterized in that an air supply tube provided with a slot for the exit of the air is arranged in the upper region of the dryer duct or ducts, and in that this air supply tube can be pivoted about its axis.

35. Facility according to Claim 17, characterized in that a common emission device (45) is provided in the facility both for the dryer (8) and for the tunnel furnace (9) on the entry side of the transportation means (12, 20) for drying and burning, respectively.

36. Facility according to Claim 17, characterized in that a tandem gripper (44) is provided at the entry side of the transportation means (12, 20) for drying and burning, respectively, the dried and burnt bricks returned in each case via the corresponding return devices (15, 22) in the lowest level of the facility being able to be displaced together.

37. Facility according to Claim 20, characterized in that the suction or compression elements (28) being designed as rectangular hollow bodies provided with an air supply or suction line (29) arranged in their upper region, and in that they have apertures (30) for air exit and entry on opposite side faces.

## Revendications

1. Procédé de séchage et/ou de cuisson de briques crues (2), comme par exemple briques crues perforées, dans lequel on dispose les briques crues (2) en une couche sous forme de rangées et de lignes sur un moyen de transport (12 ; 20) et on opère le séchage au moyen d'air chaud, les distances entre les briques crues (2) étant telles que toutes celles-ci se comportent lors du séchage et/ou de la cuisson comme des briques indépendantes, caractérisé par le fait que la distance (K) entre les rangées disposées dans la direction de mouvement du moyen de transport est supérieure à la distance (b) entre les lignes, de façon telle qu'entre les rangées soient formés des canaux qui servent alternativement à l'amenée et à l'évacuation d'air.

2. Procédé selon la revendication 1, caractérisé par le fait que la distance (b) entre les briques crues d'une rangée (3) est choisie inférieure ou au plus égale à quatre fois l'épaisseur (B) de la paroi extérieure de la brique perforée.

3. Procédé selon l'une des revendications 1 et 2, caractérisé par le fait que les briques perforées sont disposées avec leurs perforations (4) perpendiculaires à la direction de transport (T).

4. Procédé selon l'une des revendications 1 et 2, caractérisé par le fait que les briques perforées sont disposées avec leurs perforations orientées dans la direction de transport.

5. Procédé selon l'une des revendications 1 et 2, caractérisé par le fait que les briques perforées sont disposées avec leurs perforations perpendiculaires à la direction de transport et verticales.

6. Procédé selon les revendications précédentes, caractérisé par le fait que l'organisation de la disposition des briques est choisie identique pour le séchage et pour la cuisson.

7. Procédé selon les revendications 3 et 4, caractérisé par le fait qu'aux canaux sont associés des moyens alternativement d'insufflation d'air dans les perforations disposées horizontalement et d'aspiration d'air de celles-ci (fig. 4, 5).

8. Procédé selon les revendications 3 et 4, caractérisé par le fait que, pendant la cuisson des briques, des gaz chauds venant de brûleurs sont insufflés dans les canaux (K) entre les briques perforées.

9. Procédé selon la revendication 8, caractérisé par le fait que les gaz chauds venant de brûleurs sont dirigés latéralement sur les briques.

10. Procédé selon la revendication 5, caractérisé par le fait que pendant le séchage de briques perforées disposées verticalement, des courants d'air de sens contraire dans les rangées de briques voisines sont envoyés dans les perforations.

11. Procédé selon la revendication 5, caractérisé par le fait que, pendant la cuisson de briques perforées disposées verticalement, des courants de gaz chauds de sens contraire dans les rangées de briques voisines sont envoyés dans les perforations.

12. Procédé selon l'une des revendications 10 et 11, caractérisé par le fait que l'air de séchage ou les gaz chauds est (sont) insufflé(s) dans une rangée de briques et, après un renvoi, réinsufflé(s) dans les perforations des briques de la rangée voisine.

13. Procédé selon la revendication 12, caractérisé par le fait que l'air de séchage ou les gaz chauds venant de brûleurs sont conditionnés par sections.

14. Procédé selon la revendication 1, caractérisé par le fait que le séchage et la cuisson se font dans la même direction de transport.

15. Procédé selon l'une des revendications 10 et 11, caractérisé par le fait que l'air de séchage et/ou les gaz chauds venant de brûleurs sont amenés des deux extrémités d'un canal d'amenée et/ou d'évacuation d'air ou de gaz chauds (K).

16. Procédé selon la revendication 15, caractérisé par le fait que les vitesses d'entrée de l'air de séchage ou des gaz chauds amenés d'extrémités opposées du canal sont différentes.

17. Installation pour la mise en oeuvre du procédé selon les revendications 1 à 16, comportant un séchoir (8) ayant au moins un canal de séchage, et de préférence un four de cuisson (9), au moins dans le canal de séchage étant placés des moyens de transport pour le séchage (12) mobiles chacun de façon discontinue et éventuellement, dans le canal de cuisson du four de cuisson étant placés des moyens de transport pour la cuisson (20), destinés à recevoir les briques crues, caractérisée par le fait que le canal de séchage (8) et le four de cuisson de préférence prévu (9) sont placés l'un à côté de l'autre, et que les moyens de transport se déplacent dans le même sens pendant le séchage ou la cuisson des briques, de sorte que le chargement du canal de séchage et éventuellement du canal de cuisson s'opère d'un côté et que, dans le séchoir, les buses d'amenée et d'évacuation d'air (15, 16) sont disposées en alternance, et dans le four de séchage, les brûleurs sont disposés en rangées.

18. Installation selon la revendication 17, caractérisée par le fait que les moyens de transport des briques sont des chariots, des courroies, des coussins d'air ou des barres.

19. Installation selon la revendication 18, caractérisée par le fait que le moyen de transport pour la cuisson présente un fond destiné à recevoir les briques, entre les briques étant placés dans les canaux des dispositifs directeurs se rétrécissant en direction du plafond du canal et formant un V sensiblement renversé.

20. Installation selon la revendication 17, caractérisée par le fait que dans la partie supérieure du séchoir (8) sont prévus en alternance des corps d'aspiration et de refoulement (28) placés à distance les uns des autres, et que ces corps d'aspiration et de refoulement peuvent éventuellement être descendus entre les briques en direction des canaux (K) et remontés.

21. Installation selon la revendication 20, caractérisée par le fait qu'au-dessus des briques (2) est placée une couverture (35) qui présente des fentes pour le passage des corps d'aspiration et de refoulement (28).

22. Installation selon la revendication 17, caractérisée par le fait que les buses d'amenée et d'évacuation d'air dans le cas du séchage et/ou les brûleurs dans le cas de la cuisson sont, à chaque temps de transport, placés dans la zone des canaux (K) formés entre les briques, pour la formation d'un mur d'air ou de gaz chauds.

23. Installation selon la revendication 17, caractérisée par le fait que le fond du moyen de transport (12) pour le séchage est pourvu d'ouvertures (36) placées les unes à côté des autres, de façon telle que deux briques (2) placées l'une à côté de l'autre d'une rangée puissent être posées dans leurs zones de bord sur les côtes restantes (37), que dans ces ouvertures (36) ou au-dessous du fond traversé par celles-ci sont placés en alternance des dispositifs (38, 39) de soufflage et d'aspiration d'air, et que dans la partie supérieure du séchoir sont prévus des évidements (40) correspondant aux ouvertures, ces évidements (40) étant reliés deux à deux pour permettre une déviation de l'air.

24. Installation selon la revendication 23, caractérisée par le fait que l'entrée d'air se fait latéralement des deux côtés du canal de séchage, et que les vitesses d'entrée d'air des deux entrées sont variables.

25. Installation selon la revendication 17, caractérisée par le fait que le moyen de transport (20) pour la cuisson comprend un fond pourvu d'ouvertures (36), de façon telle que deux briques (2) placées l'une à côté de l'autre d'une rangée puissent être placées par leurs zones de bord sur les côtes restantes (37), que dans les ouvertures (36) sont placés en alternance des brûleurs (42) et des dispositifs d'aspiration, et que dans le canal de cuisson est placée au-dessus des briques une couverture (38) qui permet une déviation de l'air.

26. Installation selon l'une des revendications 17, 23 et 25, caractérisée par le fait que les moyens de transport passant dans le canal de séchage et/ou le canal de cuisson sont placés les uns derrière les autres de manière serrée.

27. Installation selon la revendication 25, caractérisée par le fait que les brûleurs sont des brûleurs à grande vitesse.

28. Installation selon la revendication 25, caractérisée par le fait que la couverture est ondulée, chaque onde recouvrant deux files voisines de briques.

29. Installation selon l'une des revendications 17 à 28, caractérisée par le fait que le séchoir (8) comprend deux canaux d'aller (13, 14) séparés et placés l'un au-dessus de l'autre.

30. Installation selon l'une des revendications 17 à 28, caractérisée par le fait que le four tunnel (9) comprend deux canaux de cuisson (9a, 9b) séparés et placés l'un au-dessus de l'autre.

31. Installation selon l'une des revendications 17 et 29, caractérisée par le fait qu'au-dessous du canal ou des canaux d'aller (13, 14) est prévu un canal de retour (15) pour le moyen de transport chargé (12) pour le séchage.

32. Installation selon l'une des revendications 17 et 30, caractérisée par le fait que parallèlement au four tunnel (9) est prévu à l'extérieur de celui-ci un retour (22) pour le moyen de transport chargé (20) pour la cuisson.

33. Installation selon la revendication 17, caractérisée par le fait que le moyen de transport (20) pour la cuisson présente un fond plein pourvu d'éléments d'appui (24) pour les briques (2).

34. Installation selon la revendication 17, caractérisée par le fait que dans la partie supérieure du canal ou des canaux de séchage est placé un tuyau d'amenée d'air pourvu d'une fente de sortie d'air, et que ce tuyau d'amenée d'air peut tourner autour de son axe.

35. Installation selon la revendication 17, caractérisée par le fait que pour le séchoir (8) et pour le four tunnel (9) est prévu, sur le côté d'entrée dans l'installation des moyens de transport (12, 20) pour le séchage et pour la cuisson, un dispositif commun d'émission (45).

36. Installation selon la revendication 17, caractérisée par le fait que sur le côté d'entrée des moyens de transport (12, 20) pour le séchage et pour la cuisson est prévu un préhenseur tandem (44), les briques séchées et cuites ramenées au niveau inférieur à l'installation par l'intermédiaire des dispositifs de retour correspondants (15, 22) pouvant être déplacées ensemble.

37. Installation selon la revendication 20, caractérisée par le fait que les corps d'aspiration et de refoulement (28) sont des corps creux rectangulaires pourvus d'une conduite d'amenée ou d'aspiration d'air (29) placée dans leur partie supérieure, et qu'ils présentent sur des faces latérales opposées des orifices (30) de sortie et d'entrée d'air..
